Europäisches Patentamt

European Patent Office

Office européen des brevets

(19)

(11) Numéro de publication : **0 084 031**
**B1**

# (12) FASCICULE DE BREVET EUROPÉEN

(45) Date de publication du fascicule du brevet :
16.04.86

(21) Numéro de dépôt : 82902073.4

(22) Date de dépôt : 16.07.82

(86) Numéro de dépôt international :
PCT/FR 82/00119

(87) Numéro de publication internationale :
WO/8300547 (17.02.83 Gazette 83/05)

(51) Int. Cl.⁴ : **F 26 B 23/00**, F 26 B  7/00,
F 26 B 21/04, F 26 B 17/00,
F 26 B  3/22

(54) PROCEDE DE SECHAGE PAR COMPRESSION DE VAPEUR.

(30) Priorité : 28.07.81 FR 8114670

(43) Date de publication de la demande :
27.07.83 Bulletin 83/30

(45) Mention de la délivrance du brevet :
16.04.86 Bulletin 86/16

(84) Etats contractants désignés :
BE CH DE FR GB LI LU NL SE

(56) Documents cités :
EP-A- 0 015 109
FR-A- 2 106 708
FR-A- 2 441 813
GB-A-   292 542
GB-A-   709 131

(73) Titulaire : **BEGHIN-SAY SOCIETE ANONYME**

F-59239 Thumeries (FR)

(72) Inventeur : **CUEL, Jacques**
**47, rue Galilé**
**F-75016 Paris (FR)**

(74) Mandataire : **Quéré, Jean Pierre**
**BEGHIN-SAY Service Propriété Industrielle 54, Avenue Hoche**
**F-75008 Paris (FR)**

Jouve, 18, rue St-Denis, 75001 Paris, France

Description

La présente invention concerne un procédé de séchage de matières humides, notamment de végétaux.

On connaît déjà des sécheurs « à chambre de combustion » : leur consommation énergétique varie entre 600 et 750 Kcal/Kg d'eau évaporée selon les dispositifs de récupération utilisés. En outre, l'emploi de ces sécheurs entraîne une consommation non négligeable de combustible.

La présente invention vise un procédé de séchage dit « à basse température ». Ce procédé consiste essentiellement à mettre en contact la matière humide avec les éléments de chauffe du sécheur, la vapeur issue de matière humide étant comprimée mécaniquement de manière à fournir le fluide caloporteur alimentant les éléments de chauffe du sécheur.

Selon l'invention on choisit les températures de façon à ce que le fluide caloporteur soit également constitué d'une certaine quantité d'air travaillant entre deux températures : l'air est saturé à la température basse et non saturé à la température haute.

Les calories nécessaires à l'évaporation sont fournies dans le sécheur aussi bien par contact surface de chauffe/solide que surface de chauffe/air humide.

L'air humide chaud sortant du sécheur est, avant compression, refroidi dans le faisceau d'un évaporateur, dont le fluide froid est constitué de l'eau condensée dans les éléments de chauffe et de l'eau condensée dans l'évaporateur lui-même.

On a trouvé qu'il était particulièrement intéressant que la calandre de l'évaporateur soit équilibrée sur un condensateur barométrique et fournisse à l'aspiration du motocompresseur la vapeur, qui après compression, alimente les éléments de chauffe du sécheur.

On connaît par la demande de brevet européen EP-A-00 15 109 un procédé qui consiste à introduire un matériau humide dans un sécheur et à le mettre en contact avec des surfaces de chauffe afin de vaporiser le liquide qu'il contient. Cette vapeur est extraite du sécheur, comprimée et réintroduite dans le sécheur comme fluide de chauffage des surfaces de chauffe où elle se condense en cédant son énergie latente de vaporisation au matériau humide.

Dans ce procédé on comprime directement la vapeur dégagée par le produit à sécher. Les gaz parasites sont négligés, il s'agit de l'air susceptible d'entrer dans la chambre de séchage et les gaz incondensables dégagés par le produit en séchant ; or ces gaz parasites ont un effet négatif sur le rendement du compresseur. Le procédé de l'invention supprime cet inconvénient par la condensation de la vapeur issue du produit pour engendrer une vapeur noble et pure qui peut être comprimée sans inconvénient.

Dans le cas du brevet EP-A-00 15 109 les fuites sont les pertes de vapeur alors que dans le procédé de l'invention il s'agit seulement d'un mélange air-vapeur donc à débit volumétrique égal, une perte thermique beaucoup plus faible.

On connaît également la demande de brevet FR-A-24 41 813 où le procédé de séchage consiste à chauffer les végétaux au moyen d'une première partie des vapeurs extraites du sécheur préalablement comprimées et d'une deuxième partie des vapeurs extraites préalablement surchauffées par échange de chaleur avec un fluide auxiliaire.

Pour la première partie on retrouve les mêmes inconvénients que cités plus haut, relatifs aux entrées d'air parasite et des gaz incondensables. Mais le système suppose par ailleurs une source de chaleur extérieure à température suffisamment élevée pour surchauffer la vapeur et cette vapeur participe au séchage par l'apport thermique qu'elle fournit en se refroidissant à la température de la vapeur saturée correspondant à la pression régnant dans le sécheur. Dans le procédé de l'invention l'air saturé de vapeur d'eau n'apporte pas un flux notable de calories à cause de l'absence de toute source de chaleur extérieure. Dans le procédé de l'invention l'air humide est moins un élément d'introduction de calories dans le sécheur que de transfert de calories à l'extérieur du sécheur.

Des modes particuliers de réalisation de l'invention font l'objet des revendications 2 à 13.

La température de la matière humide à l'entrée du sécheur est avantageusement comprise entre 50 °C et 100 °C : elle est de préférence d'environ 60 °C.

La température de la vapeur alimentant les éléments de chauffe du sécheur est comprise entre 100 °C et 160 °C : elle est, de préférence, voisine de 110 °C.

La température du mélange vapeur/air issu de la vapeur humide est comprise entre 80 °C et 110 °C : elle est, de préférence, voisine de 75 °C.

La température des condensats provenant des éléments de chauffe est comprise entre 70 °C et 100 °C : elle est, de préférence, de 75 °C.

La température de l'air saturé injecté dans la partie inférieure du sécheur est comprise entre 60 °C et 100 °C : elle est de préférence voisine de 70 °C.

Les dessins annexés et les exemples suivants, permettront de mieux comprendre l'invention :

La planche 1/3 illustre le principe de base d'un procédé de séchage connu.

La planche 2/3 illustre le procédé de séchage selon l'invention.

La planche 3/3 présente un dispositif de séchage permettant la mise en œuvre du procédé.

Sur la planche 1/3 on a représenté schématiquement un sécheur (1) pourvu d'éléments de chauffe (2) alimentés par de la vapeur (3). La matière humide (4) est introduite dans la partie supérieure du sécheur par une écluse (5). Un dispositif approprié permet de faire avancer la matière humide sur les éléments de chauffe. Arrivée à l'extrémité (6) d'un élément, la matière tombe par gravité sur l'élément immédiatement inférieur.

Le fond du sécheur comporte une écluse (7) destinée à évacuer la matière sèche.

La vapeur (8) dégagée par la matière humide chauffée est comprimée par un motocompresseur (9) et alimente ensuite les éléments de chauffe (2) du sécheur.

Exemple 1 :

3 900 Kg de végétaux humides (4), de chaleur spécifique 0,29, contenant 23 % de matières sèches et dont la température est de 60 °C sont introduits en (5).

Les éléments de chauffe (2) sont alimentés par de la vapeur à 130 °C. Au sommet du sécheur, on recueille 2 900 Kg de vapeur (8) à 105 °C. Le motocompresseur, à un seul étage absorbe une puissance de 182 Kwh (rendement 76 %) et comprime la vapeur de 105 °C à 130 °C.

Après désurchauffe, on recueille 3 109 Kg de vapeur qui alimente les éléments de chauffe (2).

On récupère en (10) à la sortie des éléments de chauffe 3 109 Kg de matière sèche à 90 % de siccité, à une température de 95 °C.

Abstraction faite des pertes par rayonnement, le sécheur a une consommation de 0,062 Kwh par Kg d'eau évaporée.

Ce chiffre est à comparer avec la consommation de sécheurs à chambre de combusion : 600 à 750 Kcal/Kg d'eau évaporée.

On a cependant constaté que le sécheur décrit dans l'exemple 1 présente quelques inconvénients :

le coefficient d'échange entre un solide et une surface chauffante est faible ;

il est assez difficile d'obtenir de la vapeur recomprimable directement, car certains défauts d'étanchéité permettent des rentrées d'air et la matière humide contient de l'air ou des gaz inclus ou occlus ;

une condensation se produit dans la partie froide de l'appareil.

L'invention permet d'apporter une solution aux inconvénients précités.

La planche 2/3 illustre celle-ci, décrite dans l'exemple ci-après.

Exemple 2 :

3 900 Kg de végétaux humides (4), de chaleur spécifique 0,29, contenant 23 % de matières sèches et dont la température est de 60 °C sont introduits en (5).

Les éléments de chauffe (2) sont chauffés par de la vapeur à 110 °C.

A la base du sécheur, on introduit en (11) de l'air saturé chauffé à 70 °C par passage sur des tubes (21) dans lesquels circule l'eau condensée de la vapeur comprimée, à l'aide d'un ventilateur (17). L'air saturé est constitué de 3 708 Kg d'air sec et de 1 031 Kg de vapeur.

Au sommet du réacteur on récupère en (8) un mélange constitué de 3 708 Kg d'air et de 3 931 Kg de vapeur, à une température de 95 °C.

Ce mélange est dirigé vers un évaporateur sous vide (12). Il est ramené à saturation à 70 °C dans le faisceau (13) par échange avec fluide froid constitué d'eau à 60 °C — température réglée par le condenseur (16) — qui fournit de la vapeur à 60 °C. Le fluide froid a pour source 3 021 Kg d'eau à 75 °C (10) provenant du retour des éléments de chauffe et de l'eau des retours de l'évaporateur, recyclés côté fluide froid. On recueille à la sortie du faisceau 2 900 Kg à 75 °C (14) que l'on dirige vers une cuve (15) : on obtient ainsi 5 921 Kg à 75 °C. A la sortie de l'évaporateur, on récupère 3 112 Kg de vapeur : 222 Kg sont dirigés vers un condenseur (16) et 2 890 Kg vers le motocompresseur (9). La vapeur est comprimée à 110 °C.

Pour faire fonctionner le sécheur on a estimé qu'il fallait lui fournir 3 323 Kg de vapeur à 110 °C alors que théoriquement 3 021 Kg seraient suffisants (condensats récupérés en (10)) : il y a donc 302 Kg de pertes, soit environ 10 %.

Le motocompresseur a absorbé 422 Kwh : la consommation du sécheur est donc de 0,146 Kwh/Kg d'eau évaporé (2 900 Kg évaporés).

On récupère en (7) 1 000 Kg de matières sèches à 90 % de siccité, dont la température est de 85 °C.

Le procédé de séchage selon l'invention permet de travailler à « basse température ». Il ne présente, dans le procédé exposé à l'exemple 2, aucun inconvénient quant aux rentrées d'air parasite puisque le séchage se fait en milieu air-vapeur : les calories contenues dans l'air refroidi sont recyclées dans le sécheur à la sortie du faisceau de l'évaporateur. En outre, l'air participe au transfert des calories et améliore le séchage.

Bien que l'exemple précédent décrit un procédé de séchage conduit à la pression atmosphérique, il est bien évident que l'on peut envisager de sécher la matière humide sous une pression supérieure.

Sur la planche 3/3, on a représenté un sécheur permettant de mettre en œuvre le procédé de séchage qui vient d'être décrit.

Il est constitué d'une enveloppe cylindrique verticale dans laquelle sont disposés des éléments de chauffe (2) formant des plateaux chauffants horizontaux montés en quinconce de façon à permettre à la matière humide (4) pénétrant dans le sécheur par l'écluse (5) de circuler d'un plateau à l'autre par gravité.

Les plateaux sont complétés par des tubes (3) dans lesquels circule de la vapeur.

La matière à sécher est entraînée sur les plateaux par des vis de transport (20) dont les axes sont parallèles.

Les vis fonctionnent sans jeu et la surface (19) des plateaux est cannelée. La matière sèche est évacuée par l'écluse (7). Le sécheur est pourvu dans sa partie inférieure d'une ouverture (11) permettant l'entrée d'air préchauffé par passage sur des tubes (21) dans lesquels circule l'eau condensée de la vapeur recomprimée et dans sa partie supérieure d'une ouverture (18) permettant l'évacuation du mélange air/vapeur issu de la matière à sécher.

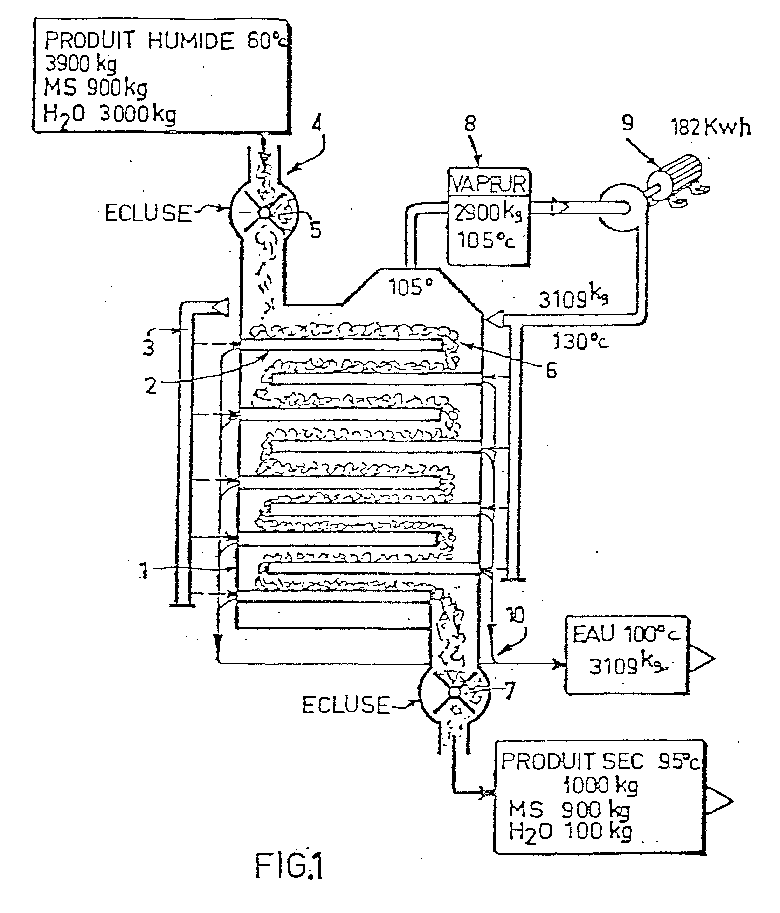

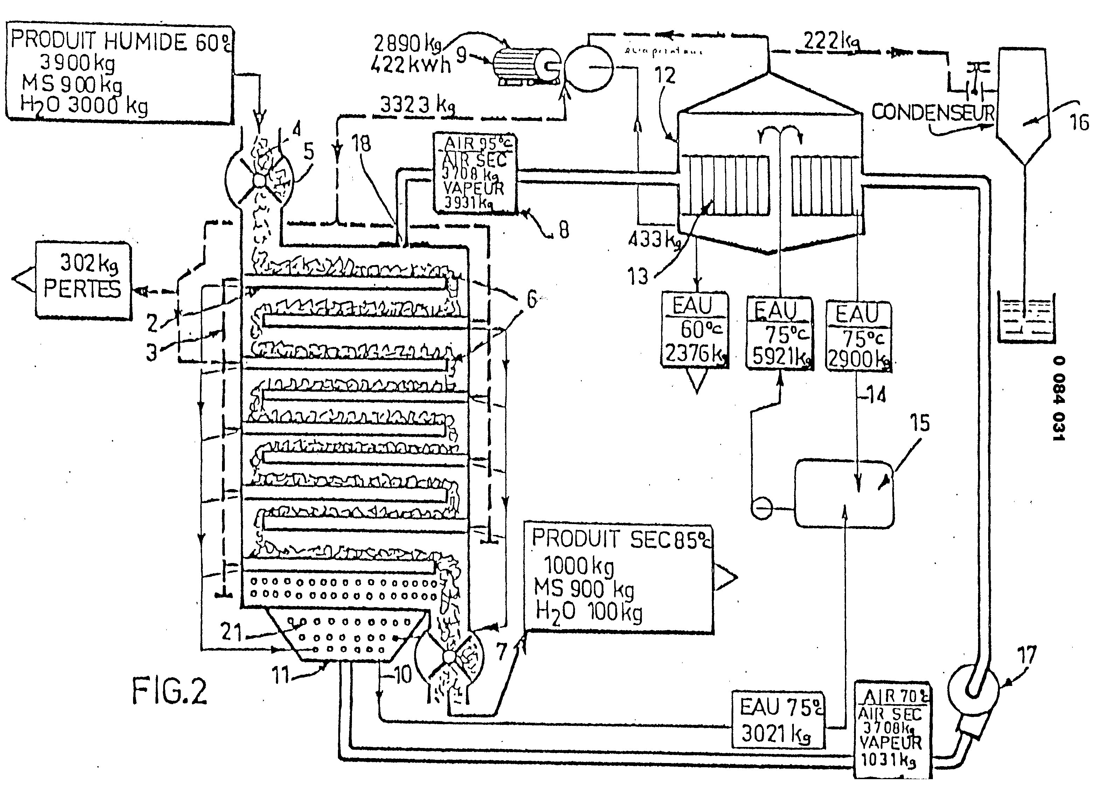

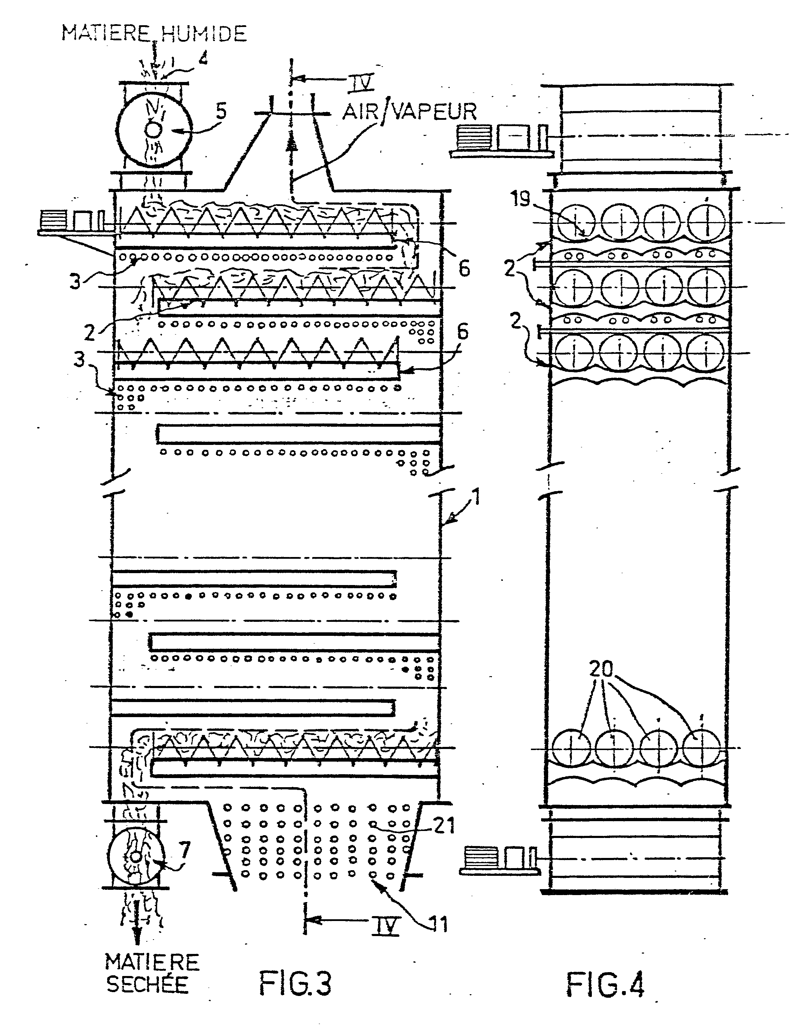

## Revendications

1. Procédé de séchage d'une matière humide circulant sur les éléments de chauffe (2) d'un sécheur vertical alimenté par un fluide caloporteur constitué de vapeur préalablement comprimée à l'aide d'un motocompresseur (9), caractérisé en ce que de l'air saturé est injecté dans la partie (11) inférieure du sécheur.

2. Procédé de séchage selon la revendication 1, caractérisé en ce que le mélange vapeur issue de la matière humide/air saturé injecté passe dans un évaporateur (12) dans lequel circule un fluide froid.

3. Procédé de séchage selon la revendication 2, caractérisé en ce que la calandre de l'évaporateur est équilibrée sur un condenseur (16) barométrique et fournit à l'aspiration du motocompresseur (9) la vapeur, qui après compression, alimente les éléments de chauffe (2) du sécheur.

4. Procédé de séchage selon l'une quelconque des revendications précédentes, caractérisé en ce que la température de la matière humide à l'entrée (5) du sécheur est comprise entre 50 °C et 100 °C.

5. Procédé de séchage selon la revendication 4, caractérisé en ce que la température de la matière humide à l'entrée du sécheur est d'environ 60 °C.

6. Procédé de séchage selon l'une quelconque des revendications précédentes, caractérisé en ce que la température de la vapeur et/ou de la vapeur mélangée à de l'air (8) issue de la matière humide est comprise entre 80 °C et 110 °C.

7. Procédé de séchage selon l'une quelconque des revendications précédentes, caractérisé en ce que la température de la vapeur comprimée à l'aide dudit motocompresseur (9), est comprise entre 100 et 160 °C.

8. Procédé de séchage selon la revendication 7, caractérisé en ce que la température de ladite vapeur comprimée est d'environ 110 °C.

9. Procédé de séchage selon l'une quelconque des revendications 2 à 8, caractérisé en ce que la température du fluide froid circulant dans l'évaporateur est d'environ 60 °C.

10. Procédé de séchage selon l'une quelconque des revendications 2 à 9, caractérisé en ce que la température de l'eau condensée dans les éléments de chauffe (2) du sécheur est d'environ 75 °C.

11. Procédé de séchage selon l'une quelconque des revendications 2 à 10, caractérisé en ce que la température de l'eau condensée (14) de l'évaporateur est d'environ 75 °C.

12. Procédé de séchage selon l'une quelconque des revendications précédentes, caractérisé en ce que la température de l'air saturé injecté dans la partie inférieure (11) du sécheur est d'environ 70 °C.

13. Procédé de séchage selon l'une quelconque des revendications précédentes, caractérisé en ce que la matière humide présente une siccité d'environ 23 %.

## Claims

1. A process for drying damp material circulating on the heating elements (2) of a vertical drier fed with a heat-conveying fluid constituted by vapour which has previously been compressed by means of a motor compressor (9), characterised in that saturated air is injected into the lower part (11) of the drier.

2. A process for drying according to Claim 1, characterised in that the vapour mixture emanating from the damp material/saturated air which is injected passes into an evaporator (12) in which a cold fluid circulates.

3. A process for drying according to Claim 2, characterised in that the calender of the evaporator is regulated on a barometric condenser (16) and supplies to the intake of the motor compressor (9) the vapour, which, after compression, supplies the heating elements (2) of the drier.

4. A process for drying according to any one of the preceding claims, characterised in that the temperature of the damp material at the inlet (5) of the drier is in the range from 50 °C to 100 °C.

5. A process for drying according to Claim 4, characterised in that the temperature of the damp material at the inlet of the drier is approximately 60 °C.

6. A process for drying according to any one of the preceding claims, characterised in that the temperature of the vapour, and/or of the vapour mixed with air (8), emanating from the damp material is in the range from 80 °C to 110 °C.

7. A process for drying according to any one of the preceding claims, characterised in that the temperature of the vapour compressed by means of the said motor compressor (9) is in the range from 100 to 160 °C.

8. A process for drying according to Claim 7, characterised in that the temperature of the said compressed vapour is approximately 110 °C.

9. A process for drying according to any one of Claims 2 to 8, characterised in that the temperature of the cold fluid circulating in the evaporator is approximately 60 °C.

10. A process for drying according to any one of Claims 2 to 9, characterised in that the temperature of the water condensed in the heating elements (2) of the drier is approximately 75 °C.

11. A process for drying according to any one of Claims 2 to 10, characterised in that the temperature of the condensed water (14) of the evaporator is approximately 75 °C.

12. A process for drying according to any one of the preceding claims, characterised in that the temperature of the saturated air injected into the lower part (11) of the drier is approximately 70 °C.

13. A process for drying according to any one of the preceding claims, characterised in that the damp material exhibits a dryness of approximately 23 %.

**Patentansprüche**

1. Verfahren zum Trocknen eines feuchten Materials, das sich im Kreislauf auf den Heizelementen (2) eines senkrechten Trockners befindet, der mit einem aus im vorhinein mit Hilfe eines Motorkompressors (9) verdichtetem Dampf gebildeten Wärmeträgerströmungsmittel gespeist wird, dadurch gekennzeichnet, daß in den unteren Teil (11) des Trockners gesättigte Luft eingespritzt wird.

2. Verfahren zum Trocknen nach Anspruch 1, dadurch gekennzeichnet, daß das aus dem feuchten Material und der eingespritzten gesättigten Luft entstandene Dampfgemisch in einen Verdampfer (12) eintritt, in welchem kaltes Strömungsmittel umläuft.

3. Verfahren zum Trocknen nach Anspruch 2, dadurch gekennzeichnet, daß die Rolle des Verdampfers auf einem barometrischen Verdampfer (16) im Gleichgewicht gehalten wird und dem Ansaugen des Motorkompressors (9) den Dampf liefert, der nach dem Verdichten die Heizelemente (2) des Trockners speist.

4. Verfahren zum Trocknen nach jedem der vorhergehenden Ansprüche, dadurch gekennzeichnet, daß die Temperatur des feuchten Materials am Eingang (5) des Trockners zwischen 50 °C und 100 °C liegt.

5. Verfahren zum Trocknen nach Anspruch 4, dadurch gekennzeichnet, daß die Temperatur des feuchten Materials am Eingang des Trockners etwa 60 °C beträgt.

6. Verfahren zum Trocknen nach jedem der vorhergehenden Ansprüche, dadurch gekennzeichnet, daß die Temperatur des Dampfes und/oder des mit Luft (8) vermischten Dampfes, der aus dem feuchten Material austritt, zwischen 80 °C und 110 °C beträgt.

7. Verfahren zum Trocknen nach einem der vorhergehenden Ansprüche, dadurch gekennzeichnet, daß die Temperatur des mit Hilfe des oben erwähnten Motorkompressors (9) verdichteten Dampfes zwischen 100 und 160 °C liegt.

8. Verfahren zum Trocknen nach Anspruch 7, dadurch gekennzeichnet, daß die Temperatur des oben erwähnten verdichteten Dampfes etwa 110 °C beträgt.

9. Verfahren zum Trocknen nach jedem der vorhergehenden Ansprüche 2 bis 8, dadurch gekennzeichnet, daß die Temperatur des in dem Verdampfer im Kreislauf umlaufenden kalten Strömungsmittels etwa 60 °C beträgt.

10. Verfahren zum Trocknen nach jedem der Ansprüche 2 bis 9, dadurch gekennzeichnet, daß die Temperatur des kondensierten Wassers in den Heizelementen (2) des Trockners etwa 75 °C beträgt.

11. Verfahren zum Trocknen nach jedem der Ansprüche 2 bis 10, dadurch gekennzeichnet, daß die Temperatur des kondensierten Wassers (14) des Verdampfers etwa 75 °C beträgt.

12. Verfahren zum Trocknen nach jedem der vorhergehenden Ansprüche, dadurch gekennzeichnet, daß die Temperatur der in den unteren Teil (11) des Trockners eingespritzten gesättigten Luft etwa 70 °C beträgt.

13. Verfahren zum Trocknen nach jedem der vorhergehenden Ansprüche, dadurch gekennzeichnet, daß das feuchte Material einen Trockenheitsgrad von etwa 23 % hat.

FIG.1

FIG.2

PRODUIT HUMIDE 60%
3900 kg
MS 900 kg
H₂O 3000 kg

2890 kg
422 kwh

3323 kg

222 kg

CONDENSEUR

16

12

9

18

4

5

AIR 95°c
AIR SEC
3708 kg
VAPEUR
3931 kg

8

433 kg

13

302 kg
PERTES

2

3

6

EAU
60°c
2376 k

EAU
75°c
5921 kg

EAU
75°c
2900 k

14

15

PRODUIT SEC 85%
1000 kg
MS 900 kg
H₂O 100 kg

21

11

10

7

EAU 75°
3021 kg

AIR 70°
AIR SEC
3708 k
VAPEUR
1031 kg

17

0 084 031

MATIERE HUMIDE

AIR/VAPEUR

MATIERE
SECHÉE

FIG.3

FIG.4